# EUROPÄISCHE PATENTSCHRIFT

(11) **EP 1 117 952 B1**
(45) Veröffentlichungstag und Bekanntmachung des Hinweises auf die Patenterteilung: **19.12.2001**
(21) Anmeldenummer: 99948836.4
(22) Anmeldetag: 23.09.1999
(51) Int. Cl.: F16H 61/12

(54) **VERFAHREN ZUR REDUZIERUNG DER THERMISCHEN BELASTUNG EINES AUTOMATGETRIEBES FÜR EIN KRAFTFAHRZEUG IN EINEM NOTFAHRBETRIEB**
METHOD FOR REDUCING THE THERMAL LOAD ON AN AUTOMATIC TRANSMISSION FOR A MOTOR VEHICLE IN EMERGENCY OPERATING MODE
PROCEDE PERMETTANT DE REDUIRE LA CHARGE THERMIQUE D'UNE BOITE DE VITESSES AUTOMATIQUE D'UN VEHICULE AUTOMOBILE DANS UN MODE DE SECOURS

(30) Priorität: 29.09.1998 DE 19844618
(43) Veröffentlichungstag der Anmeldung: 25.07.2001
(73) Patentinhaber: ZF Batavia, L.L.C., Batavia, OH 45103 (US)
(72) Erfinder: GIERLING, Armin, D-88085 Langenargen (DE); HENGSTLER, Hans-Dieter, D-88213 Ravensburg (DE); HOFSTÄTTER, Helmut, D-88074 Meckenbeuren (DE)
(74) Vertreter: Zietlow, Karl-Peter
(86) Internationale Anmeldenummer: EP9907072
(87) Internationale Veröffentlichungsnummer: WO0019130

(56) Entgegenhaltungen:
- DE-A- 1 455 474
- DE-A- 4 436 506
- DE-A- 19 755 128
- US-A- 4 779 577
- US-A- 4 807 495
- US-A- 4 962 680
- US-A- 5 103 692
- US-A- 5 445 128
- US-A- 5 460 581
- PATENT ABSTRACTS OF JAPAN vol. 1998, no. 10, 31. August 1998 (1998-08-31) & JP 10 122005 A (UNISIA JECS CORP), 12. Mai 1998 (1998-05-12)

## Beschreibung

Die Erfindung betrifft ein Verfahren zur Reduzierung der thermischen Belastung eines Automatgetriebes für ein Kraftfahrzeug in einem Notfahrbetrieb nach der im Oberbegriff des Patentanspruches 1 näher definierten Art.

Als nächstkommender Stand der Technik kann die US-A-5 460 581 angesehen werden, die in Übereinstimmung mit dem Oberbegriff von Anspruch 1 folgendes zeigt:

Verfahren zur Reduzierung der thermischen Belastung eines Automatgetriebes für ein Kraftfahrzeug in einem Notfahrbetrieb, wobei das Automatgetriebe von einer elektronischen Getriebesteuereinrichtung gesteuert wird, die stetig Signale mit einer digitalen Motorelektronik eines Verbrennungsmotors austauscht.

Weiterhin wird bei dieser US-A-5 460 581 im Notfahrbetrieb von einem getriebeunabhängigen Programmodul der digitalen Motorelektronik das Motormoment reduziert. Das Programmodul ist ganz offensichtlich in der Motorelektronik integriert und erhält Signale über den Zustand des Getriebes, um dann im Fall einer Notsituation das Motormoment herunter zu steuern, so daß ein beträchtlicher steuerungstechnischer Aufwand erforderlich ist.

Die Nutzung der Intelligenz in der Elektronik findet bei Kraftfahrzeugen mit modernen Automatgetrieben ihren Ausdruck im Einsatz einer Elektronischen Getriebesteuerung (EGS), mit der bekanntlich kundenrelevante Kriterien wie z. B. der Fahrkomfort und Fahrbarkeit als auch sicherheitsrelevante Kriterien in hohem Maße erfüllt werden. Zur situationsabhängigen Gangwahl kommuniziert die Elektronische Getriebesteuerung stetig mit weiteren Steuergeräten und Rechnern verschiedener Aggregate über einen CAN-(Controller Area Network)-Datenbus.

Für den Fall eines Defektes der Elektronischen Getriebesteuerung sind häufig Notfahrprogramme vorgesehen, welche so ausgelegt sind, daß ein Fahrzeug in einem Notfahrbetrieb in einem möglichst weiten Fahrbereich betrieben werden kann. Je nach Notlaufkonzept ist jedoch die Kühlung des Getriebes in einem solchen Notfahrzustand, da der Wärmeanfall im Notfahrbetrieb des Getriebes über das Kühlsystem des Fahrzeuges abgeführt werden muß und das Getriebe bei einem kompletten Ausfall der Elektronischen Getriebesteuerung keine eigenen Möglichkeiten hat, auf den Wärmehaushalt positiv einzuwirken.

Insbesondere trifft dies auf CVT-(Continuously Variable Transmission)-Automatgetriebe zu, welche einen Variator zur stufenlosen Einstellung eines Übersetzungsverhältnisses zwischen einer kürzest möglichen Übersetzung (LOW) und einer längsten möglichen Übersetzung (overdrive, OD) aufweisen.

In "ATZ Automobiltechnische Zeitschrift" 96 (1994) ist ein derartiges CVT-Getriebe mit einem ersten Kegelscheibenpaar auf einer Antriebswelle als Primärscheibensatz und mit einem zweiten Kegelscheibenpaar auf einer Abtriebswelle als Sekundärscheibensatz beschrieben. Jedes Kegelscheibenpaar besteht aus einer in axialer Richtung feststehenden ersten Scheibe und einer in axialer Richtung verschiebbaren zweiten Scheibe, welche je nach Zugehörigkeit zu dem Primär- oder Sekundärscheibensatz als Primärscheibe bzw. Sekundärscheibe bezeichnet wird. Zwischen den Kegelscheibenpaaren läuft ein Drehmomentübertragungsglied, welches z. B. ein die Kegelscheibenpaare umschlingendes Schubgliederband darstellt. Zur Verstellung der Primärscheibe oder der Sekundärscheibe werden diese mit einem Druckmedium aus einer Druckquelle beaufschlagt, wobei der jeweils in den Stellräumen von Primärscheibe und Sekundärscheibe anliegende Druck mit Hilfe einer Elektronischen Getriebesteuerung und einer elektrohydraulischen Druckversorgungseinrichtung eingestellt wird.

Aus der DE 44 36 506 ist eine Einrichtung zum Steuern eines CVT-Getriebes bekannt, bei dem ein elektronisches Steuergerät über elektromagnetische Stellglieder und hydraulische Ventile das Druckniveau der insbesondere dynamisch nicht ausgeglichenen Stellräume von Primärscheibe und Sekundärscheibe bestimmt.

Für einen Ausfall des elektronischen Steuergerätes ist eine Notfahreinrichtung vorgesehen, die zwei Druckregelventile, zwei Druckreduzierventile und mindestens ein Notventil aufweist, wobei ein Primärventil und ein Sekundärventil ein konstantes statisches Druckverhältnis bzw. Kraftverhältnis zwischen Primärscheibe und Sekundärscheibe bei konstantem statischen Sekundärdruckniveau einstellt.

Über den Betrag dieses statischen Kraftverhältnisses und der dynamischen Kräfte an den dynamisch nicht druckausgeglichenen Scheiben kann festgelegt werden, wie groß die Übersetzungsänderung des CVT-Getriebes von einem Normalbetrieb zu dem Notfahrbetrieb ist. Der Notfahrbetrieb wird dabei als ein Zustand des CVT-Getriebes beschrieben, in dem eine Drehzahlregelung und eine Anpreßregelung der Sekundärscheibe unterbrochen ist.

Bei dieser bekannten Einrichtung variiert die Übersetzung des CVT-Getriebes in Abhängigkeit von dem abgegebenen Moment einer als Antriebseinheit vorgesehenen Brennkraftmaschine, wobei die variable Übersetzungsänderung im Notfahrbetrieb ein sicheres Anfahren am Berg und eine verbesserte Fahrbarkeit mit hoher Endgeschwindigkeit ermöglicht.

Als Eingangssignal an einem elektronischen Steuergerät liegt z. B. das Signal einer Laststellung der Antriebseinheit wie die Drosselklappenstellung im Falle einer Brennkraftmaschine, die Drehzahl der Getriebeeingangswelle, die Drehzahl der Abtriebswelle oder die Temperatur des Druckmediums vor. Aus dem Eingangssignal wird ein Betriebspunkt bestimmt und die dazugehörige Drehzahl der Getriebeeingangswelle oder die Übersetzung des CVT-Getriebes eingestellt. Wenn ein Fehler auftritt, geht das CVT-Getriebe in den Notfahrbetrieb über, bei dem keine Drehzahlregelung und keine Anpreßdruckregelung der Sekundärscheibe mehr erfolgt.

Diese bekannte Lösung bietet zwar einen weiten möglichen Verstellbereich des Variators, jedoch ist es problematisch, daß der Anpreßdruck für die entsprechenden Scheiben nach den extremen Eckpunkten des Fahrbarkeitsbereiches ausgelegt werden muß. Einer dieser Eckpunkte ist die Sicherstellung der maximalen Anfahrleistung in dem kleinsten Gang, d. h. in oder nahe der LOW-Übersetzung. Für die Variatorübertragungsfähigkeit ist bei größter Übersetzung und hohem Antriebsmoment ein hoher Anpreßdruck an der Sekundärscheibe erforderlich. Aufgrund des konstanten statischen Druckverhältnisses zwischen Primärscheibe und Sekundärscheibe ist die an der Sekundärscheibe eingestellte statische Kraft, deren Betrag sich nach dem maximal zu übertragenden Antriebsmoment richtet, im gesamten Momentenbereich konstant.

Dies hat aber in weiten Fahrbereichen eine unerwünschte Überanpressung zur Folge, welche in nachteilhafter Weise zu einer hohen Betriebstemperatur in dem Variator mit erhöhtem Wirkungsgradverlust und Verschleiß des Variatorsystems führt.

Besonders kritisch ist in diesem Zusammenhang der Einsatz einer Vorortelektronik.

Der vorliegenden Erfindung liegt die Aufgabe zugrunde, ein Verfahren zur Reduzierung der thermischen Belastung eines Automatgetriebes für ein Kraftfahrzeug in einem Notfahrbetrieb zur Verfügung zu stellen, mit dem thermische und mechanische Schäden an dem Automatgetriebe durch Wärmeeinwirkung während des Notfahrbetriebs vermieden werden.

Erfindungsgemäß wird diese Aufgabe mit einem Verfahren nach dem Patentanspruch 1 gelöst.

Mit Hilfe des erfindungsgemäßen Verfahrens, bei dem im Notfahrbetrieb von der Digitalen Motorelektronik ein zulässiges maximales Motormoment für den Notfahrbetrieb (M_mot_max_not) vorgegeben wird, kann durch eine einfache Beschränkung des Betriebsbereichs erreicht werden, daß eine thermische Überbeanspruchung und ein wärmebedingter Verschleiß von Komponenten des Automatgetriebes sowie eine thermische Alterung des Getriebeöls verhindert wird.

Die Begrenzung des Motormoments durch ein Programmodul in der Motorelektronik, die auch zu einer Begrenzung der Fahrgeschwindigkeit führt, stellt dabei eine einfache, aber wirkungsvolle Maßnahme sowohl in Verbindung mit einem elektrohydraulisch gesteuerten Stufenautomatgetriebe konventioneller Art als auch in Verbindung mit einem CVT-Getriebe dar.

Besonders vorteilhaft ist die Anwendung des erfindungsgemäßen Verfahrens bei CVT-Getrieben, da hier bei einer nur geringen Einschränkung der Betriebsbereitschaft der durch die Überanpressung bedingte Wärmeeintrag am Variator mit den entsprechenden Verschleißfolgen verhindert wird.

Die erfindungsgemäße Schutzfunktion dient auch in sehr vorteilhafter Weise dem mechanischen Getriebeschutz bei einem Wandlerautomatgetriebe, falls das mögliche Getriebeeingangsmoment infolge der wandlertypspezifischen Drehmomentenüberhöhung das getriebebauteilspezifisch zulässige Getriebeeingangsmoment überschreiten kann.

In diesem Fall kann das maximal zulässige Getriebeeingangsmoment seitens der Digitalen Motorelektronik durch entsprechende Begrenzung des maximal zulässigen Motormoments in dem Notfahrbetrieb permanent abgesichert werden.

Alternativ kann auch vorgesehen sein, daß die Digitale Motorelektronik mittels einer sogenannten Stallspeeed-Begrenzung einen autarken Motoreingriff durchführt, durch den gleichzeitig eine Wandlererhöhung begrenzt wird.

In allen Fällen kann durch den Verzicht auf extreme Eckpunkte der Fahrbarkeit im Notfahrbetrieb die Dimensionierung des Getriebeölkühlers klein gehalten werden.

Weitere Vorteile und Weiterbildungen der Erfindung ergeben sich aus den Unteransprüchen und aus den nachfolgend anhand der Zeichnung prinzipmäßig beschriebenen Ausführungsbeispielen.
Es zeigt:
- Fig. 1: ein Flußdiagramm eines Verfahrens zur Reduzierung der thermischen Belastung eines Automatgetriebes in einem Notfahrbetrieb durch Motormomentenreduzierung;
- Fig. 2: eine schematisierte Darstellung des Verlaufs des Motormoments in Abhängigkeit von der Motordrehzahl mit einer Motormomentenreduzierung in einem Stallspeed-Bereich und
- Fig. 3: ein Flußdiagramm zu der Motormomentenreduzierung in dem Stallspeed-Bereich gemäß Fig. 2 mit einer zeitlichen Beschränkung des Fahrbetriebs in dem Stallspeed-Bereich.

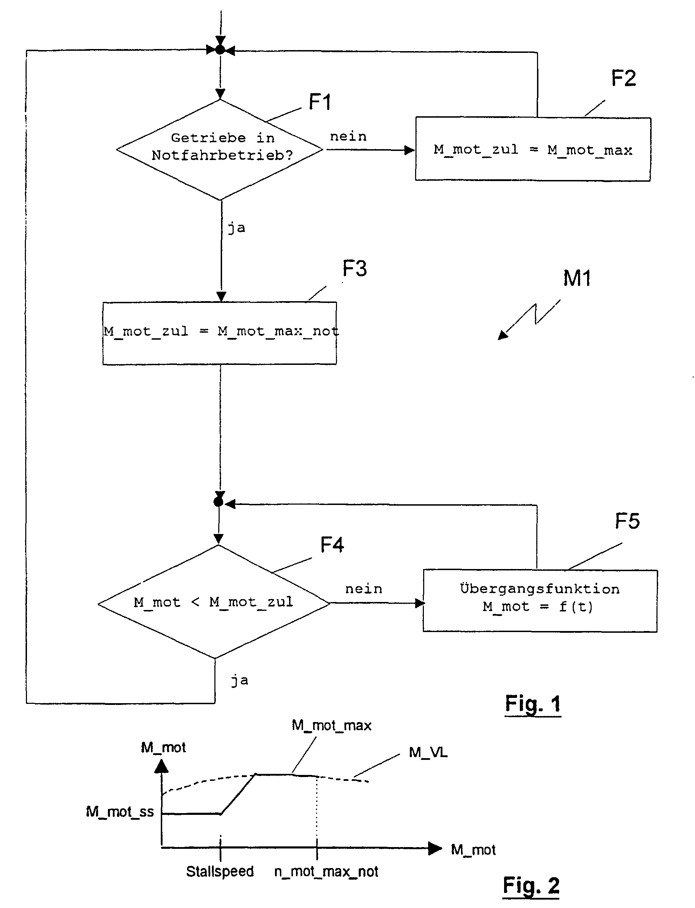

Bezug nehmend auf Fig. 1 ist schematisch ein Verfahrens zur Reduzierung der thermischen Belastung eines Automatgetriebes in einem Notfahrbetrieb durch Beschränkung eines Motormoments M_mot dargestellt.

Zur Durchführung des Verfahrens ist in einer nicht näher dargestellten Digitalen Motorelektronik eines Verbrennungsmotors, welche Signale über einen CAN-(Controller Area Network)-Datenbus mit einer Elektronischen Getriebesteuereinrichtung austauscht, ein von der Getriebesteuerung unabhängiges Programmodul M1 vorgesehen.

In dem Programmodul M1 wird zunächst in einer ersten Funktion F1 stetig geprüft, ob ein einen Normalbetrieb der Elektronischen Getriebesteuereinrichtung anzeigendes CAN-Signal an der Digitalen Motorelektronik eingeht. Wenn dies der Fall ist, wird von der Digitalen Motorelektronik in einer nachfolgenden Funktion F2 ein für das Fahrzeug vorgesehenes maximales Motormoment im Normalbetrieb M_mot_max als zulässiges Motormoment M_mot_zul ausgegeben.

Falls durch Fehlen des CAN-Signales, daß Normalbetrieb herrscht, erkannt wird, daß sich das Getriebe in Notfahrbetrieb befindet, wird in einer Funktion F3 von der Digitalen Motorelektronik das zulässige Motormoment M_mot_zul auf ein maximales Motormoment für den Notfahrbetrieb M_mot_max_not, welches z. B. das 0,6-fache des maximalen Motormoments M_mot_max beträgt, begrenzt.

Im Notfahrbetrieb wird in einer weiteren Unterscheidungsfunktion F4 geprüft, ob ein aktuelles Motormoment M_mot kleiner oder gleich dem maximalen Motormoment für den Notfahrbetrieb M_mot_max_not ist. Falls dies gegeben ist, wird zu dem Beginn des Programmoduls M1 zurückverzweigt.

Wenn jedoch das aktuelle Motormoment M_mot größer als das zulässige maximale Motormoment für den Notfahrbetrieb M_mot_max_not bei dessen Vorgabe ist, wird eine ebenfalls in der Digitalen Motorelektronik implementierte Übergangsfunktion F5 gestartet, die einen sicheren Übergang von dem aktuellen Motormoment M_mot in das zulässige maximale Motormoment für den Notfahrbetrieb M_mot_max_not gewährleistet.

Die zeitabhängige Übergangsfunktion F5 reduziert das aktuelle Motormoment M_mot rampenförmig, d. h. langsam, so lange bis das zulässige maximale Motormoment für den Notfahrbetrieb M_mot_max_not erreicht ist. Dadurch wird eine abrupte Motormomentenänderung mit entsprechenden Fahrkomforteinbußen und sicherheitskritischen Fahrzeuginstabilitäten vermieden.

Im vorliegenden Ausführungsbeispiel wird das Verfahren zur Reduzierung der thermischen Belastung des Automatgetriebes im Notfahrbetrieb bei einem CVT-Automatgetriebe angewandt, welches einen Variator mit einem Primärscheibensatz, einem Sekundärscheibensatz und mit einem diese umschlingenden Schubgliederband als Drehmomentübertragungsglied aufweist. In dem Notfahrbetrieb wird eine Anpreßdruckregelung des Sekundärscheibensatzes unterbrochen und ein konstantes statisches Druckverhältnis zwischen dem Primärscheibensatz und dem Sekundärscheibensatz eingestellt.

Durch die Begrenzung des zulässigen Motormoments M_mot_zul im Notfahrbetrieb des Getriebes wird der Betriebsbereich des Fahrzeuges gezielt eingeschränkt, wobei die Betriebszustände des CVT-Automatgetriebes mit hoher Überanpressung an dem Variator verringert werden, ohne die Betriebsbereitschaft des Fahrzeuges deutlich einzuschränken.

Bezug nehmend auf Fig. 2 ist eine Motormomentenreduzierung in einem Stallspeed-Bereich mit einem autarken Motoreingriff der Digitalen Motorelektronik anhand von Kennlinien in einem Motormoment/Motordrehzahl-Diagramm ersichtlich.

Das vorliegenden Ausführungsbeispiel bezieht sich dabei auf ein Wandlerautomatgetriebe. Die Reduzierung der thermischen Getriebebelastung ist bei Wandlerautomatgetrieben im Falle des hydraulischen Getriebe-Notlaufes besonders wichtig, da die Wandlerüberbrückungskupplung mangels Aktuatordurchgriff im Notfahrbetrieb nicht mehr geschlossen werden kann, wodurch eine thermisch kritische Situation entsteht.

Ein Betriebsbereich sehr hohen Wärmeeintrags in das Getriebe ist prinzipiell der Stallspeed-Bereich. Dies kann bewußt durch den Fahrer herbeigeführt werden, wobei ein langer Aufenthalt in oder nahe einem Stallspeed-Punkt thermisch kritisch ist.

Um den kritischen Auslegungspunkt im Stallspeed-Bereich hinsichtlich der thermischen Entwicklung im Getriebe zu verbessern, biete es sich zunächst an, wie in dem in Fig. 1 dargestellten Verfahren ein konstantes maximales Motormoment für den Notfahrbetrieb des Getriebes festzusetzen.

Mit einer für den Stallspeed-Punkt geeigneten Begrenzung des Motormoments über den gesamten Betriebsbereich wird jedoch ein Eingriff vorgenommen, wodurch die Fahrbarkeit bzw. die Verfügbarkeit des Fahrzeuges deutlich herabgesetzt wird.

Mit der in Fig. 2 dargestellten Lösung wird das Motormoment M_mot lediglich in dem kritischen Stallspeed-Bereich auf einen Stallspeed-Wert M_mot_ss reduziert. Oberhalb der entsprechenden Stallspeed-Motordrehzahl wird das maximale Motormoment M_mot_max bei Vollast VL wieder zugelassen, bis eine Drehzahlbegrenzung für den Notfahrbetrieb n_mot_max_not, welche eine Geschwindigkeitsbegrenzung darstellt, greift.

Gleichzeitig mit der Motormomentenbegrenzung kann eine Wandlererhöhung (nicht dargestellt) begrenzt werden, wenn als Antriebselement ein Drehmomentwandler dient.

Auf die in Fig. 2 gezeigte Weise wird eine maximal mögliche Verfügbarkeit des Fahrzeugs im Notfahrbetrieb des Getriebes erzielt.

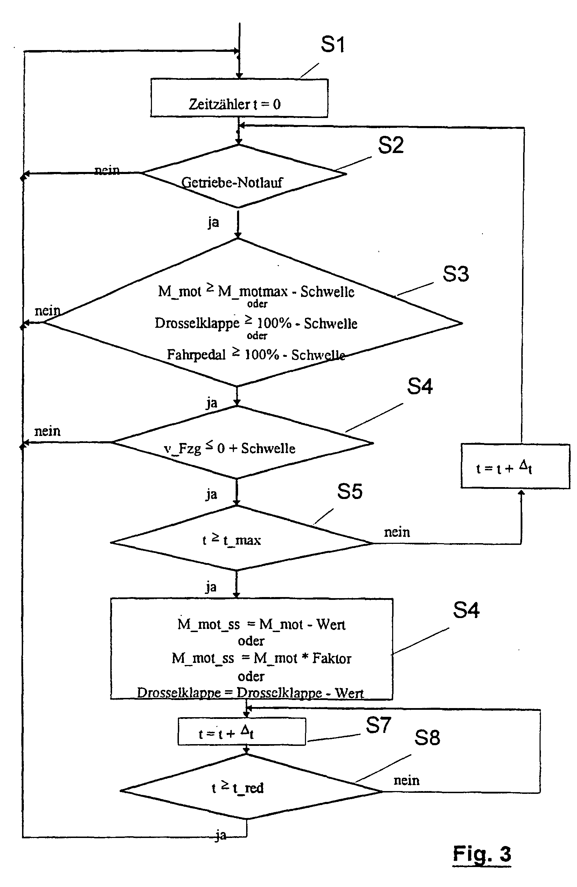

Bezug nehmend auf Fig.3 ist ein Verfahren zur Durchführung einer anhand von Fig. 2 erläuterten Motormomentenbegrenzung im Stallspeed-Bereich ersichtlich, wobei das Motormoment in dem Stallspeed-Bereich M_mot_ss als mechanischer Schutz des Automatgetriebes auf ein zulässiges statisches Getriebeeingangsmoment M_Getriebe_ein in einer einen Kraftfluß anfordernden Schaltposition begrenzt wird.

Um eine weitere Erhöhung der Fahrzeugmobilität zu erlangen, ist der Fahrbetrieb im Stallspeed in dem in Fig. 3 gezeigten Ausführungsbeispiel zeitlich begrenzt.

Wie Fig. 3 zu entnehmen ist, wird zunächst in einem Schritt S1 ein Zeitzähler zurückgesetzt und in einer nachfolgenden Unterscheidungsfunktion S2 überprüft, ob ein Getriebe-Notlauf vorliegt. Wenn dies der Fall ist, wird in einem weiteren Schritt S3 geprüft, ob ein hohes Getriebeeingangsmoment vorliegt. Als Kriterien hierzu dient ein Schwellwert, der sich auf das maximale zulässige Motormoment M_mot_max oder die Drosselklappe oder das Fahrpedal bezieht.

Zur Erkennung eines Fahrer-Mißbrauchs kann in weiteren Ausführungen zusätzlich auch eine Bremslicht- oder Bremsdruck-Information sowie eine wandlertypspezifisch zu erwartende Stallspeed-Drehzahl verwendet werden.

Wenn ein zu hohes Getriebeeingangsmoment erkannt wird, wird in einer weiteren Unterscheidungsfunktion S4 geprüft, ob ein Fahrzeugstillstand oder eine niedrige definierte Fahrgeschwindigkeit vorliegt. Falls auch dies gegeben ist, wird in einem Schritt S5 abgefragt, ob eine erste applizierbare Zeit t_max von 10 sec abgelaufen ist.

Bei Erfüllung dieser Bedingung wird in einem weiteren Schritt S6 die Getriebeeingansmomentenreduzierung auf den Stallspeed-Wert M_mot_ss, welcher hier 20 % eines Vollastmomentes M_VL entspricht, mit geeigneten Mitteln wie z. B. einer Einspritzausblendung oder einer Drosselklappenrücknahme durchgeführt.

Erst nach Ablauf einer weiteren in einem Schritt S7 gestarteten und in einer Unterscheidungsfunktion S8 überwachten applizierbaren Zeit t_red von 2 min wird das volle Motormoment M_mot_max_not wieder zugelassen, um ein wiederholtes Herbeiführen eines Fahrbetriebes im Stallspeed-Bereich durch den Fahrer zu verhindern.

Auf die in Fig. 3 dargestellte Weise kann der Aufheizung des Getriebeöls und einer thermischen Überbeanspruchung des Getriebes deutlich entgegengewirkt werden.

Solange die Elektronische Getriebesteuerung im hydraulischen Notlauf noch aktiv ist, kann diese auch die Momentenreduzierung als Langzeitmotoreingriff über ein CAN-Signal bei der Motorsteuerung anfordern.

Zur Verbesserung der Getriebekühlung kann schließlich in weiteren Ausführungen ein Motorlüfter gestartet werden, der bei einer applizierbaren, z. B. um 20 K abgesenkten Kühlmitteltemperatur C_Lüfter_ein_not betrieben wird. Alternativ hierzu kann der Motorlüfter selbstverständlich auch permanent laufen.

### Bezugszeichen

- F1: Unterscheidungsfunktion
- F2: Verarbeitungsfunktion
- F3: Verarbeitungsfunktion
- F4: Unterscheidungsfunktion
- F5: Übergangsfunktion
- M1: Programmodul
- M_mot: Motormoment
- M_mot_max_not: zulässiges maximales Motormoment im Notfahrbetrieb
- M_mot_ss: Motormoment im Stallspeed-Bereich
- M_mot_zul: zulässiges Motormoment
- M_VL: Vollastmoment
- n_mot: Motordrehzahl
- n_mot_max_not: Drehzahlbegrenzung
- S1: Verarbeitungsfunktion
- S2: Unterscheidungsfunktion
- S3: Unterscheidungsfunktion
- S4: Unterscheidungsfunktion
- S5: Unterscheidungsfunktion
- S6: Verarbeitungsfunktion
- S7: Verarbeitungsfunktion
- S8: Unterscheidungsfunktion
- t: Zeit
- t_ max: applizierbare Zeit
- t_red: applizierbare Zeit
- v_FZG: Fahrzeuggeschwindigkeit

## Patentansprüche

1. Verfahren zur Reduzierung der thermischen Belastung eines Automatgetriebes für ein Kraftfahrzeug in einem Notfahrbetrieb, wobei das Automatgetriebe von einer elektronischen Getriebesteuereinrichtung angesteuert wird, die stetig Signale mit einer digitalen Motorelektronik eines Verbrennungsmotors austauscht, **dadurch gekennzeichnet, daß** in dem Notfahrbetrieb von einem getriebeunabhängigen Programmodul der digitalen Motorelektronik ein zulässiges maximales Motormoment für den Notfahrbetrieb (M_mot_max_not) vorgegeben wird.

2. Verfahren nach Anspruch 1, **dadurch gekennzeichnet, daß** das zulässige maximale Motormoment für den Notfahrbetrieb (M_mot_max_not) vorgegeben wird, wenn von der digitalen Motorelektronik der Notfahrbetrieb des Automatgetriebes aufgrund des Fehlens eines einen Normalbetrieb anzeigenden Signales der elektronischen Getriebesteuereinrichtung erkannt wird.

3. Verfahren nach Anspruch 1 oder 2, **dadurch gekennzeichnet, daß** als zulässiges maximales Motormoment für den Notfahrbetrieb (M_mot_max_not) ein konstanter Wert gewählt wird.

4. Verfahren nach einem der Ansprüche 1 bis 3, **dadurch gekennzeichnet, daß** als zulässiges maximales Motormoment für den Notfahrbetrieb (M_mot_max_not) das 0,6-fache eines maximalen Motormoments (M_mot_max) gewählt wird.

5. Verfahren nach einem der Ansprüche 1 bis 3, **dadurch gekennzeichnet, daß** das zulässige Motormoment (M_mot) in Abhängigkeit einer Motordrehzahl (n_mot) derart vorgegeben wird, daß es in einem definierten Stallspeed-Bereich auf einen Stallspeed-Wert (M_mot_ss) reduziert wird und in einem Bereich der Motordrehzahi (n_mot) zwischen dem Stallspeed-Bereich und einer zulässigen maximalen Motordrehzahl für den Notfahrbetrieb (n_mot_max_not) oder einer damit äquivalenten Größe ein maximales Motormoment (M_mot_max) zugelassen wird.

6. Verfahren nach Anspruch 5, **dadurch gekennzeichnet, daß** der Stallspeed-Bereich durch Überwachung des aktuellen Motormomentes (M_mot) oder einer damit äquivalenten Größe und einer aktuellen Fahrgeschwindigkeit (v_aktuell) oder einer damit äquivalenten Größe wie Drosselklappe oder Fahrpedal erkannt wird.

7. Verfahren nach Anspruch 5 oder 6, **dadurch gekennzeichnet, daß** ein von einem Fahrer bewußt herbeigeführter Fahrbetrieb in dem Stallspeed-Bereich durch ein Bremslichtsignal oder ein Bremsdrucksignal oder eine getriebetypspezifische Stallspeeddrehzahl erkannt wird.

8. Verfahren nach Anspruch 5, 6 oder 7, **dadurch gekennzeichnet, daß** ein Fahrbetrieb in dem Stallspeed-Bereich zeitlich begrenzt wird.

9. Verfahren nach Anspruch 8, **dadurch gekennzeichnet, daß** das Motormoment in dem Stallspeed-Bereich (M_mot_ss) nach Ablauf einer ersten applizierbaren Zeit (t_max) auf einen applizierbaren Wert (M_mot x Faktor) reduziert wird und das maximale Motormoment (M_mot_max) nach Ablauf einer weiteren applizierbaren Zeit (t_red) wieder zugelassen wird.

10. Verfahren nach Anspruch 9, **dadurch gekennzeichnet, daß** für die erste applizierbare Zeit (t_max) ein Zeitraum von wenigstens annähernd 10 sec und für die weitere applizierbare Zeit (t_red) ein Zeitraum von wenigstens annähernd 2 min gewählt wird.

11. Verfahren nach einem der Ansprüche 5 bis 10, **dadurch gekennzeichnet, daß** das Motormoment in dem Stallspeed-Bereich (M_mot_ss) als mechanischer Schutz des Automatgetriebes auf ein zulässiges statisches Getriebeeingangsmoment (M_Getriebe_ein) in einer einen Kraftfluß anfordernden Schaltposition begrenzt wird.

12. Verfahren nach einem der Ansprüche 5 bis 11, **dadurch gekennzeichnet, daß** das Motormoment in dem Stallspeed-Bereich (M_mot_ss) auf einen applizierbaren Prozentsatz eines Vollastmomentes (M_VL) begrenzt wird.

13. Verfahren nach einem der Ansprüche 1 bis 12, **dadurch gekennzeichnet, daß** eine Übergangsfunktion zur Überführung eines aktuellen Motormoments (M_mot) in das zulässige maximale Motormoment für den Notfahrbetrieb (M_mot_max_not) oder einer aktuellen Motordrehzahl (n_mot_aktuell) in die zulässige maximale Motordrehzahl für den Notfahrbetrieb (n_mot_max_not) gestartet wird, wenn das aktuelle Motormoment (M_mot) oder die aktuelle Motordrehzahl (n_mot_aktuell) größer als das zulässige maximale Motormoment für den Notfahrbetrieb (M_mot_max_not) oder die zulässige maximale Motordrehzahl für den Notfahrbetrieb (n_mot_max_not) ist.

14. Verfahren nach Anspruch 13, **dadurch gekennzeichnet, daß** das aktuelle Motormoment (M_mot_aktuell) in das zulässige maximale Motormoment für den Notfahrbetrieb (M_mot_max_not) oder die aktuelle Motordrehzahl (n_mot_aktuell) in die zulässige maximale Motordrehzahl für den Notfahrbetrieb (n_mot_max_not) rampenartig überführt wird.

15. Verfahren nach einem der Ansprüche 1 bis 14, **dadurch gekennzeichnet, daß** von der elektronischen Getriebesteuereinrichtung ein Variator des Automatgetriebes mit einem Primärscheibensatz, mit einem Sekundärscheibensatz und mit einem diese umschlingenden Drehmomentübertragungsglied angesteuert wird, wobei in dem Notfahrbetrieb eine Anpreßdruckregelung des Sekundärscheibensatzes unterbrochen wird und ein konstantes statisches Druckverhältnis zwischen dem Primärscheibensatz und dem Sekundärscheibensatz eingestellt wird.

16. Verfahren nach einem der Ansprüche 1 bis 15, **dadurch gekennzeichnet, daß** von der elektronischen Getriebesteuereinrichtung ein Wandlerautomatgetriebe angesteuert wird.

17. Verfahren nach einem der Ansprüche 1 bis 16, **dadurch gekennzeichnet, daß** ein Motorlüfter mit einer applizierbaren abgesenkten Kühlmitteltemperatur (C_Lüfter_ein_not) betrieben wird, wenn der Notfahrbetrieb des Automatgetriebes erkannt wird.

18. Verfahren nach einem der Ansprüche 1 bis 16, **dadurch gekennzeichnet, daß** ein Motorlüfter permanent läuft.

## Claims

1. Method for reducing the thermal load on an automatic transmission for a motor vehicle in an emergency operating mode, the automatic transmission being controlled by an electronic transmission control device which constantly exchanges signals with digital engine electronics of an internal combustion engine, **characterised in that** a maximum permissible engine torque for the emergency operating mode (T_eng_max_eme) is specified in the emergency operating mode by a transmission-independent program module of the digital engine electronics.

2. Method according to Claim 1, **characterised in that** the maximum permissible engine torque for the emergency operating mode (T_eng_max_eme) is specified when the digital engine electronics detects the emergency operating mode of the automatic transmission on the basis of the lack of a signal from the electronic transmission control device indicating normal operation.

3. Method according to Claim 1 or 2, **characterised in that** a constant value is chosen as the maximum permissible engine torque for the emergency operating mode (T_eng_max_eme).

4. Method according to one of Claims 1 to 3, **characterised in that** 0.6 times a maximum engine torque (T_eng_max) is chosen as the maximum permissible engine torque for the emergency operating mode (T_eng_max_eme).

5. Method according to one of Claims 1 to 3, **characterised in that** the permissible engine torque (T_eng) is specified as a function of the engine rpm (n_eng) in such a way that it is reduced to a stall-speed value (T_eng_ss) in a defined stall-speed range, and a maximum engine torque (T_eng_max) is permitted in a range of the engine rpm (n_eng) between the stall-speed range and a maximum permissible engine rpm for the emergency operating mode (n_eng_max_eme), or a parameter equivalent thereto.

6. Method according to Claim 5, **characterised in that** the stall-speed range is detected by monitoring the current engine torque (T_eng), or a parameter equivalent thereto, and a current vehicle velocity (v_current), or a parameter equivalent thereto, such as the throttle or accelerator.

7. Method according to Claim 5 or 6, **characterised in that** a driving mode deliberately caused by a driver in the stall-speed range is detected by a brake-light signal or a brake-pressure signal or a stall-speed rpm specific to the transmission type.

8. Method according to Claim 5, 6 or 7, **characterised in that** the driving mode in the stall-speed range is time-limited.

9. Method according to Claim 8, **characterised in that** the engine torque in the stall-speed range (T_eng_ss) is reduced to an applicable value (T_eng x factor) after a first applicable time (t_max) has elapsed, and the maximum engine torque (T_eng_max) is re-permitted after a further applicable time (t_red) has elapsed.

10. Method according to Claim 9, **characterised in that** a duration of at least approximately 10 sec is chosen for the first applicable time (t_max), and a duration of at least approximately 2 min is chosen for the further applicable time (t_red).

11. Method according to one of Claims 5 to 10, **characterised in that** the engine torque in the stall-speed range (T_eng_ss) is limited, as a mechanical protection of the automatic transmission, to a permissible static transmission input torque (T_tranamission_in) in a gearbox position requiring power to be delivered.

12. Method according to one of Claims 5 to 11, **characterised in that** the engine torque in the stall-speed range (T_eng_ss) is limited to an applicable percentage of a full-load torque (T_FL).

13. Method according to one of Claims 1 to 12, **characterised in that** a conversion function for changing a current engine torque (T_eng) to the maximum permissible engine torque for the emergency operating mode (T_eng_max_eme), or a current engine rpm (n_eng_current) to the maximum permissible engine rpm for the emergency operating mode (n_eng_max_eme), is initiated when the current engine torque (T_eng) or the current engine rpm (n_eng_current) is greater than the maximum permissible engine torque for the emergency operating mode (T_eng_max_eme) or the maximum permissible engine rpm for the emergency operating mode (n_eng_max_eme).

14. Method according to Claim 13, **characterised in that** the current engine torque (T_eng_current) is changed to the maximum permissible engine torque for the emergency operating mode (T_eng_max_eme), or the current engine rpm (n_eng_current) is changed to the maximum permissible engine rpm for the emergency operating mode (n_eng_max_eme), in a ramp fashion.

15. Method according to one of Claims 1 to 14, **characterised in that** a variator of the automatic transmission is controlled by the electronic transmission control device with a primary pulley set, with a secondary pulley set and with a torque-transmission organ which runs around them, and in the emergency operating mode, application-pressure regulation of the secondary pulley set is suspended and a constant static pressure ratio is set between the primary pulley set and the secondary pulley set.

16. Method according to one of Claims 1 to 15, **characterised in that** a continuously-variable automatic transmission is controlled by the electronic transmission control device.

17. Method according to one of Claims 1 to 16, **characterised in that** an engine fan is operated with an applicable lowered coolant temperature (C_fan_in_eme) when the emergency operating mode of the automatic transmission is detected.

18. Method according to one of Claims 1 to 16, **characterised in that** an engine fan functions permanently.

## Revendications

1. Procédé pour réduire la charge thermique d'une boîte de vitesses automatique pour un véhicule automobile en mode de détresse, dans lequel la boîte de vitesses automatique est pilotée par un dispositif électronique de commande de boîte de vitesses qui échange en permanence des signaux avec une électronique de moteur numérique appartenant à un moteur à combustion interne, **caractérisé en ce que**, en mode de détresse, un module de programme de l'électronique numérique du moteur, qui est indépendant de la boîte de vitesses, prescrit un couple moteur maximal admissible pour le mode de détresse (M_mot_max_not).

2. Procédé selon la revendication 1, **caractérisé en ce que** le couple moteur maximal admissible pour le mode de détresse (M_mot_max_not) est prescrit lorsque l'électronique numérique du moteur détecte le mode de détresse de la boîte de vitesses automatique sur la base de l'absence d'un signal du dispositif de la commande électronique de la boîte de vitesses qui indique un fonctionnement normal.

3. Procédé selon la revendication 1 ou 2, **caractérisé en ce que**, comme couple moteur maximal admissible pour le mode de détresse (M_mot_max_not), on choisit une valeur constante.

4. Procédé selon l'une des revendications 1 à 3, **caractérisé en ce que**, comme couple moteur maximal admissible pour le mode de détresse (M_mot_max_not), on choisit un couple moteur maximal égal à 0,6 fois (M_mot_max).

5. Procédé selon l'une des revendications 1 à 3, **caractérisé en ce que** le couple moteur admissible (M_mot) est prescrit en fonction d'une vitesse de rotation du moteur (n_mot) de telle manière que, dans une plage définie de vitesse de calage, il soit réduit à une valeur de vitesse de calage (M_mot_ss) et que, dans une plage de vitesse de rotation de moteur (n-mot) comprise entre la plage de vitesse de calage et une vitesse de rotation maximale admissible pour le mode de détresse (n_mot_max_not) ou un paramètre équivalent, un couple moteur maximal (M_mot_max) soit admis.

6. Procédé selon la revendication 5, **caractérisé en ce que** la plage de vitesse de calage est détectée par une surveillance du couple moteur actuel (M_mot) ou d'un paramètre équivalent et d'une vitesse de marche actuelle (v_aktuell), ou d'un paramètre équivalent, comme le volet des gaz ou la pédale d'accélérateur.

7. Procédé selon la revendication 5 ou 6, **caractérisé en ce qu'**un mode introduit sciemment par un conducteur dans la plage de vitesse de calage est signalé par un signal lumineux de freinage ou un signal de pression de freinage ou par une vitesse de rotation de calage spécifique au type de boîte de vitesses.

8. Procédé selon la revendication 5, 6 ou 7, **caractérisé en ce qu'**un mode dans la plage de vitesses de calage est limité dans le temps.

9. Procédé selon la revendication 8, **caractérisé en ce que**, dans la plage de vitesse de calage (M_mot_ss), le couple moteur est réduit à une valeur applicable (M_mot x Faktor) après écoulement d'un premier temps applicable (t_max) et que le couple moteur maximal (M_mot_max) est de nouveau admis après écoulement d'un nouveau temps applicable (t_red).

10. Procédé selon la revendication 9, **caractérisé en ce que**, pour le premier temps applicable (t_max), on choisit un laps de temps d'au moins 10 sec. et, pour le nouveau temps applicable (t_red), on choisit un laps de temps d'au moins 2 min.

11. Procédé selon l'une des revendications 5 à 10, **caractérisé en ce que**, dans la plage de vitesse de calage (M_mot_ss), pour assurer la protection mécanique de la boîte de vitesses automatique, le couple moteur est limité à un couple d'entrée de la boîte de vitesses statique admissible (M_Getriebe_ein) dans une position de rapport de boîte qui exige un flux de force.

12. Procédé selon l'une des revendications 5 à 11, **caractérisé en ce que**, dans la plage de vitesse de calage (M_mot_ss), le couple moteur est limité à un pourcentage applicable d'un couple de pleine charge (M_VL).

13. Procédé selon l'une des revendications 1 à 12, **caractérisé en ce qu'**une fonction de transition pour le passage d'un couple moteur actuel (M_mot) au couple moteur maximal admissible pour le mode de détresse (M_mot_max_not) ou pour le passage d'une vitesse actuelle de rotation du moteur (n_mot_aktuell) à la vitesse de rotation maximale du moteur pour le mode de détresse (n_mot_max_not) est démarrée lorsque le couple moteur actuel (M_mot), ou la vitesse de rotation du moteur (n_mot_aktuell), est supérieur au couple moteur maximal admissible pour le mode de détresse (M_mot_max_not), ou à la vitesse de rotation maximale admissible du moteur pour le mode de détresse (n_mot_max_not).

14. Procédé selon la revendication 13, **caractérisé en ce que** le couple moteur actuel (M_mot_aktuell) est amené au couple moteur maximal admissible pour le mode de détresse (M_mot_max_not), ou la vitesse de rotation actuelle du moteur (n_mot_aktuell) à la vitesse de rotation maximale admissible du moteur pour le mode de détresse (n_mot_max_not) par une variation en rampe.

15. Procédé selon l'une des revendications 1 à 14, **caractérisé en ce que** le dispositif électronique de commande de la boîte de vitesses pilote un variateur de la boîte de vitesses automatique qui comprend un jeu de poulies primaires, un jeu de poulies secondaires et un organe de transmission du couple qui embrasse ces jeux, tandis que, dans le mode de détresse, une régulation de la pression de serrage du jeu de poulies secondaires est interrompue et un rapport de pression statique constant est établi entre le jeu de poulies primaires et le jeu de poulies secondaires.

16. Procédé selon l'une des revendications 1 à 15, **caractérisé en ce que** le dispositif électronique de commande de la boîte de vitesse pilote une boîte de vitesses automatique à convertisseur de couple.

17. Procédé selon l'une des revendications 1 à 16, **caractérisé en ce qu'**un ventilateur du moteur est mis en action avec une température du milieu de refroidissement abaissée applicable (C_Lüfter_ein_not) lorsque le mode de détresse de la boîte de vitesses automatique est détecté.

18. Procédé selon l'une des revendications 1 à 16, **caractérisé en ce qu'**un ventilateur du moteur est en marche en permanence.
